# NEW EUROPEAN PATENT SPECIFICATION

(11) **EP 2 276 274 B2**
(45) Date of publication and mention of the opposition decision: **15.02.2017**
(45) Mention of the grant of the patent: 10.07.2013
(21) Application number: 09741715.8
(22) Date of filing: 06.05.2009
(51) Int. Cl.: H04W 24/04, H04W 92/14

(54) **METHOD, SYSTEM AS WELL AS BASE STATION SUBSYSTEM (BSS) AND MOBILE SWITCHING CENTRE (MSC) FOR DATA TRANSFER**
VERFAHREN, SYSTEM SOWIE BASISSTATIONS-UNTERSYSTEM (BSS) UND MOBILVERMITTLUNGSSTELLE (MSC) ZUR DATENÜBERTRAGUNG
PROCÉDÉ, SYSTÈME AINSI QUE SOUS-SYSTÈME DE STATION DE BASE (BSS) ET CENTRE DE COMMUTATION MOBILE (MSC) POUR TRANSFERT DE DONNÉES

(30) Priority: 08.05.2008 CN 200810096787
(43) Date of publication of application: 19.01.2011
(73) Proprietor: Huawei Technologies Co., Ltd., Longgang District Shenzhen, Guangdong 518129 (CN)
(72) Inventor: ZHU, Xing, Shenzhen Guangdong 518129 (CN); LUO, Shaohua, Shenzhen Guangdong 518129 (CN); LI, Guohong, Shenzhen Guangdong 518129 (CN); WANG, Chao, Shenzhen Guangdong 518129 (CN)
(74) Representative: Körber, Martin Hans
(86) International application number: PCT/CN2009/071663
(87) International publication number: WO 2009/135440

(56) References cited:
- EP-A1- 2 226 985
- CN-A- 1 547 714
- CN-A- 101 095 116
- US-A1- 2008 074 993
- "3rd Generation Partnership Project;Technical Specification Group GERAN;A-interface over IP Study (AINTIP);(Release 8)", 3GPP DRAFT; GP-080414 TR 43903-100 WITH ESSENTIAL REVISION MARKS AGAINST -004, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Seoul; 20080222, 22 February 2008 (2008-02-22), XP050019725, [retrieved on 2008-02-22]
- "Draft CR to TR 43.903-003: Input to Deployment Scenarios: Clean version, G2-080093", , [Online] vol. G2-080093, no. 36BIS, 14 January 2008 (2008-01-14), pages 1-9, XP002567876, Retrieved from the Internet: URL:http://www.3gpp.org/ftp/tsg_geran/Wg2_ Protocol_Aspects/GERAN2_36bis_L jubljana/Docs/G2-080093.zip> [retrieved on 2008-01-17]
- Huawei Technologies: 3GPP Draft; GP-080179 RTP Payload for Redundant Data of a Interface over IP, 3RD Generation Partnership Project (3GPP), Mobile Competence centre; 650, route des Lucioles F-06921 Sohia-Antipolis Cedex France, TSG GERAN Seoul 20080214, 14 February 2008
- '3rd Generation Partnership Project; Technical Specification Group GERAN; A-interface over IP Study (AINTIP); (Release 8)' TECHNICAL REPORT vol. V8.0.0,1, 01 February 2008, pages 1 - 58

## Description

### Field of the Invention

The present invention relates to the communication field, and in particular, to a method, system, Base Station Subsystem (BSS), and Mobile Switching Center (MSC) for data transmission.

### Background of the Invention

In the Global System for Mobile communications (GSM) network, the A interface is an interface between the BSS and the MSC. The BSS includes a Base Station Controller (BSC) and a Base Transceiver Station (BTS). The MSC includes a Mobile Switching Center Server (MSC-S) and a Media Gateway (MGW).

The data transmitted on the A interface includes control-plane signaling and user-plane data. The control-plane signaling includes a BSS Medium Access Protocol (MAP) message or Direct Transfer Application Part (DTAP) message. The user-plane data includes voice data and Circuit-Switched Data (CSD). Two bearer modes are available for the transmission of the user-plane data on the A interface: Time Division Multiplexing (TDM) and Internet Protocol (IP). The TDM bearer mode has the merits of maturity, stability, and reliability. The IP transmission mode has the merits of high efficiency and bandwidth saving. The IP transmission mode facilitates implementation of Transcoder Free Operation (TrFO) to further improve the voice quality, facilitates implementation of MSC-Pool technology, and reduces network construction and maintenance costs. The IP transmission mode also represents the development trend of the future technologies. As a high-efficient transmission technology, the IP transmission

mode also has the following inherent weaknesses: packet loss, delay, and jitter. The packet loss affects the voice quality and reliability of the CSD services directly, and especially the fax service, which is very sensitive to the data loss.

At present, the TDM bearer mode is used for data transmission on the A interface. Due to the inherent reliability of TDM, the transmission of the user-plane data on the A interface does not require data redundancy technology. However, the communication network tends to evolve to the all-IP network. Therefore, the user-plane data bearer mode of the A interface will adopt the IP transmission technology. After the A interface over IP (AoIP) technology is adopted, because packet loss may occur when packets are transmitted over IP transmission technology, the voice quality is deteriorated and the probability of CSD service failure is high.

US 2008074993 A1 discloses a network controller device providing an inter-working function between a core network and an access network. The device comprises a first gateway configured to be connected with a switching center server over an interface which enables real-time communication streams, and a second gateway configured to be connected with a terminal over the access network, wherein the connection with the terminal can include a real-time redundancy configuration related to the loss of communication information over this connection with the terminal. The network controller device is adapted to receive information indicating that the terminal supports the real-time redundancy configuration, and to forward the information indicating the terminal's support for the real-time redundancy configuration to the switching center server.

"3rd Generation Partnership Project; Technical Specification Group GERAN;A-interface over IP Study (AINTIP);(Release 8)", 3GPP DRAFT; GP-080414 TR 43903-100 WITH ESSENTIAL REVISION MARKS AGAINST -004, 3RD GENERATION PARTNERSHIP PROJECT (3GPP) relates to the feasibility for introducing the User Plane transport over IP for the A-interface into 3GPP specification.

"Draft CR to TR 43.903-003: Input to Deployment Scenarios: Clean version, G2-080093", relates to some proposed changes to TR 43.903-003.

EP 2226985 A1 provides a method for negotiating redundant transmission during IP bearer establishment and modification processes, wherein the method of negotiating redundant transmission in the establishment process comprises: an IP bearer control module judges whether a proactive MGW supports redundant transmission; a bearer establishment request tunnel message is carried with redundant transmission parameters and sent to a reactive media gateway of two media gateways; the reactive media gateway resolves the bearer establishment request tunnel message and sends a reactive end bearer establishment request to a RTP/IP protocol processing module via the IP bearer control module, and the IP bearer control module sends a bearer establishment response tunnel message carrying a redundant transmission parameter to the proactive media gateway; ; and the proactive media gateway sends a proactive end bearer establishment request to the RTP/IP protocol processing module via the IP bearer control module so as to realize a bearer connection between the proactive end media gateway and the reactive end media gateway.

CN 1547714 A discloses a intelligent distributed file system (110) enabling the storing of file data among a plurality of smart storage units (114) which are accessed as a single file system. The intelligent distributed file system (110) utilizes a metadata data structure to track and manage detailed information about each file, including, for example, the device and block locations of the file's data blocks, to permit different levels of replication and/or redundancy within a single file system, to facilitate the change of redundancy parameters, to provide high-level protection for metadata, to replicate and move data in real-time, and so forth.

CN 101095116 A discloses a file system-aware storage system. The storage system might locate an operating system partition, parse the operating system partion to locate its data structures, and parse the operating system data structures to locate the host filesystem data structures. The storage system manages data storage based on the storage usage of the host file system. The storage system can use the storage usage information to identify storage areas that are no longer being used by the host filesystem and reclaim those areas for additional data storage capacity. Also, the storage system can identify the types of data stored by the host filesystem and manage data storage based on the data types, such as selecting a storage layout and/or an encoding scheme for the data based on the data type.

### Summary of the Invention

Embodiments of the present invention provide a method, system, BSS, and MSC for data transmission.

A method for data transmission in an embodiment of the present invention includes:
negotiating, by a BSS, a redundancy level with a MSC, through a redundancy level negotiation message;
choosing, by the BSS, a redundancy level; and
generating, by the BSS, a redundancy packet according to the chosen redundancy level and sending the redundancy packet to the MSC;
   wherein the negotiating a redundancy level by the BSS with the MSC through the redundancy level negotiation message comprises:
   sending, by the BSS, a redundancy level negotiation request message to the MSC, wherein the redundancy level negotiation request message carries information of a redundancy level supported by the BSS; and
   receiving, by the BSS, a redundancy level negotiation response message sent from the MSC, wherein the redundancy level negotiation response message carries information of a redundancy level that the MSC expects to use.

A system for data transmission in an embodiment of the present invention includes a BSS and an MSC.

The BSS is configured to send a redundancy level negotiation request message to the MSC, wherein the redundancy level negotiation request message carries information of a redundancy level supported by the BSS;

The BSS is further configured to receive a redundancy level negotiation response message sent from the MSC, wherein the redundancy level negotiation response message carries information of a redundancy level that the MSC expects to use.

The BSS is further configured to choose a redundancy level according to its own capabilities, generate a redundancy packet according to the chosen redundancy level, and send the redundancy packet to the MSC.

A BSS provided in an embodiment of the present invention includes:
a sending module, configured to send a redundancy level negotiation request message to a MSC, wherein the redundancy level negotiation request message carries information of a redundancy level supported by the BSS;
a first receiving module, configured to receive a redundancy level negotiation response message sent from the MSC, wherein the redundancy level negotiation response message carries information of a redundancy level that the MSC expects to use;
a decision-making module, configured to choose a redundancy level according to its own capabilities; and
a redundancy data generating module, configured to generate a redundancy packet according to the chosen redundancy level and send the generated redundancy packet to the MSC.

An MSC provided in an embodiment of the present invention includes:
a second receiving module, configured to receive a redundancy level negotiation request message sent from a BSS, wherein the redundancy level negotiation request message carries information of a redundancy level supported by the BSS; and
a responding module, configured to send a redundancy level negotiation response message to the BSS, wherein the redundancy level negotiation response message carries information of a redundancy level that the MSC expects to use.

In the technical solution under the present invention, redundancy level information is carried in the redundancy level negotiation message; the BSS uses the redundancy level information in the redundancy level negotiation message to negotiate a redundancy level with the MSC, and obtains a chosen redundancy level; the BSS generates a redundancy packet according to the chosen redundancy level, and sends the generated redundancy packet to the MSC through the A interface. Therefore, the probability of user data loss as a result of packet loss is substantially reduced in AoIP, and the Quality of Service (QoS) of the voice service and the CSD service is improved.

### Brief Description of the Drawings

FIG. 1 is a flowchart of a method for data transmission in an embodiment of the present invention;
FIG. 2 is a schematic drawing of redundancy level negotiation performed when a call connection is set up between a BSS and a core network in an embodiment of the present invention;
FIG. 3 is a schematic drawing of a COMPLETE LAYER 3 MESSAGE that carries newly-added Redundancy Level Information Element (IE) information in an embodiment of the present invention;
FIG. 4 is a schematic drawing of an ASSIGNMENT REQUEST message that carries newly-added Redundancy Level IE information in an embodiment of the present invention;
FIG. 5 is a schematic drawing of an ASSIGNMENT COMPLETE message that carries newly-added Redundancy Level IE information in an embodiment of the present invention;
FIG. 6 is a schematic drawing of a redundancy packet at redundancy level 2 in an embodiment of the present invention;
FIG. 7 is a schematic drawing of a redundancy packet at redundancy level 3 in an embodiment of the present invention;
FIG. 8 is a schematic drawing of a CHANNEL MODIFY REQUEST message that carries newly-added Redundancy Level IE information in an embodiment of the present invention;
FIG. 9 is a flowchart of another method for data transmission in an embodiment of the present invention;
FIG. 10 is a schematic drawing of redundancy level negotiation performed between BSSs in an embodiment of the present invention;
FIG. 11 is a schematic drawing of a HANDOVER REQUIRED message that carries newly-added Redundancy Level IE information in an embodiment of the present invention;
FIG. 12 is a schematic drawing of a HANDOVER REQUEST message that carries newly-added Redundancy Level IE information in an embodiment of the present invention;
FIG. 13 is a schematic drawing of a HADNOVER REQUEST ACKNOWLEDGE message that carries newly-added Redundancy Level IE information in an embodiment of the present invention;
FIG. 14 is a flowchart of another method for data transmission in an embodiment of the present invention;
FIG. 15 is a schematic drawing of redundancy level negotiation performed between BTSs within a BSS in an embodiment of the present invention;
FIG. 16 is a schematic drawing of a CHANNEL MODIFY REQUIRED message that carries newly-added Redundancy Level IE information in an embodiment of the present invention;
FIG. 17 is a schematic drawing of a HADNDOVER COMMAND message that carries newly-added Redundancy Level IE information in an embodiment of the present invention;
FIG. 18 is a schematic drawing of a HADNDOVER COMPLETE message that carries newly-added Redundancy Level IE information in an embodiment of the present invention;
FIG. 19 is another schematic drawing of redundancy level negotiation performed between BTSs within a BSS in an embodiment of the present invention;
FIG. 20 is a schematic drawing of an INTERNAL HANDOVER REQUIRED message that carries newly-added Redundancy Level IE information in an embodiment of the present invention;
FIG. 21 is a schematic drawing of an INTERNAL HADNDOVER COMMAND message that carries newly-added Redundancy Level IE information in an embodiment of the present invention;
FIG. 22 is a schematic drawing of an INTERNAL HADNDOVER COMPLETE message that carries newly-added Redundancy Level IE information in an embodiment of the present invention;
FIG. 23 is a structural drawing of a BSS in an embodiment of the present invention;
FIG. 24 is a structural drawing of an MSC in an embodiment of the present invention; and
FIG. 25 shows the structural drawing of a system for data transmission in an embodiment of the present invention.

### Detailed Description of the Embodiments

For better understanding of the objective, technical solution and merits of the present invention, the following describes the present invention in detail with reference to the accompanying drawings and preferred embodiments.

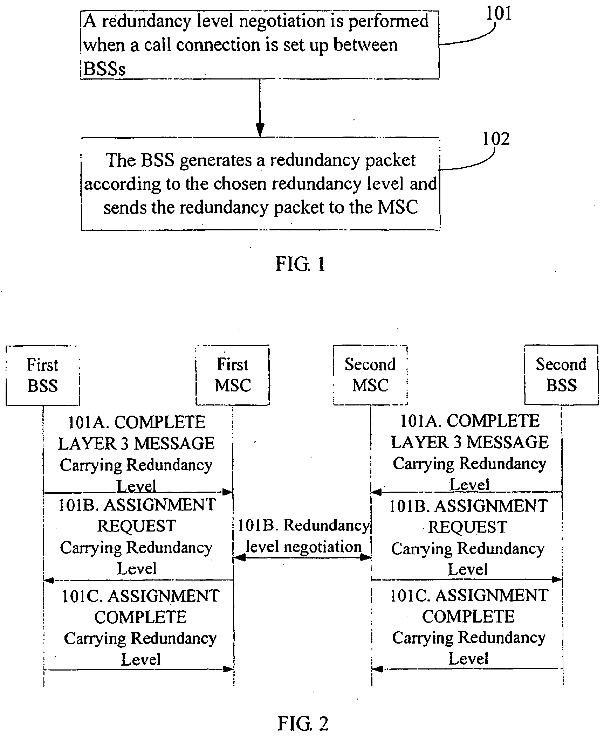

Embodiments of the present invention provide a method for data transmission. In this method, redundancy level information is carried in a redundancy level negotiation message; a BSS uses the redundancy level information in the redundancy level negotiation message to negotiate a redundancy level with a MSC, and obtains a redundancy level chosen through negotiation; the BSS generates a redundancy packet according to the chosen redundancy level, and sends the generated redundancy packet to the MSC through the A interface. Therefore, the probability of user data loss as a result of packet loss is substantially reduced in AoIP, and the QoS of the voice service and the CSD service is improved. The redundancy level negotiation message may be an existing A interface message or a redefined message. For ease of description, this embodiment takes the existing A interface message as an example of the redundancy level negotiation message. As shown in FIG. 1, the method includes the following steps:
101. A redundancy level negotiation is performed when a call connection is set up between BSSs. As shown in FIG. 2, specifically, this step includes the following:
   101A. A first BSS sends a COMPLETE LAYER 3 MESSAGE to a first MSC, where the COMPLETE LAYER 3 MESSAGE carries newly-added Redundancy Level IE information indicative of the redundancy level supported by the first BSS; a second BSS sends a COMPLETE LAYER 3 MESSAGE to a second MSC, where the COMPLETE LAYER 3 MESSAGE carries newly-added Redundancy Level IE information indicative of the redundancy level supported by the second BSS.

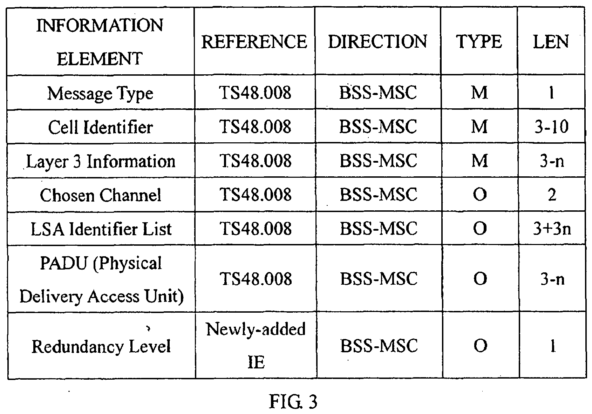

FIG. 3 shows the format of the COMPLETE LAYER 3 MESSAGE. If TYPE is set to O, it indicates an optional IE; BSS-MSC indicates the direction from the BSS to the MSC; Redundancy Level is the newly-added IE information with the length of 1 byte, indicating the redundancy level supported by the BSS. In practice, it is possible that only the voice service adopts the data redundancy technology, but the CSD service does not; or only the CSD service adopts the data redundancy technology, but the voice service does not; or both the CSD service and the voice service adopt the data redundancy technology, especially in the case that the CSD service adopts the data redundancy technology. Then, the Redundancy Level IE information is effective only on the service that adopts the data redundancy technology. When neither the voice service nor the CSD service adopts the data redundancy technology, the value of Redundancy Level is set to 1. When both the voice service and the CSD service adopt the data redundancy technology, they support different redundancy levels. In this case, it is necessary to define respective redundancy levels for the voice service and the CSD service. Two sub-IEs, namely, Voice Redundancy Level and CSD Redundancy Level, may be used to indicate the redundancy levels supported by the voice service and the CSD service respectively.

101B. The first MSC receives the COMPLETE LAYER 3 MESSAGE sent from the first BSS; the second MSC receives the COMPLETE LAYER 3 MESSAGE sent from the second BSS; the first MSC and the second MSC determine the redundancy level that they expect to use through negotiation, and respectively send an ASSIGNMENT REQUEST message to the first BSS and the second BSS. The ASSIGNMENT REQUEST message carries newly-added Redundancy Level IE information indicative of the redundancy level that both the first MSC and the second MSC expect to use.

Specifically, for example, in step 101A above, the redundancy level supported by the first BSS is redundancy level 3, and the redundancy level supported by the second BSS is redundancy level 4. The first MSC and the second MSC determine the redundancy level they expect to use according to the statistics reported by the system, where the determined redundancy level may be redundancy level 3 or 4, or any other redundancy level, and send the redundancy level determined through negotiation to the corresponding BSSs.

For another example, in step 101A above, the redundancy level supported by the first BSS is redundancy level 2, and the redundancy level supported by the second BSS is redundancy level 3. The first MSC and the second MSC determine the redundancy level they expect to use according to the statistics reported by the system, where the determined redundancy level may be redundancy level 3 or 4, or any other redundancy level, and send the redundancy level determined through negotiation to the corresponding BSSs.

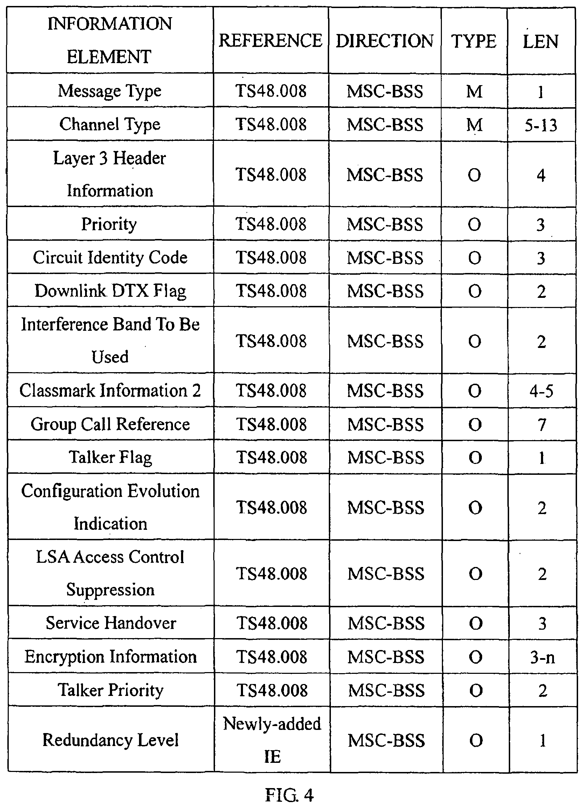

FIG. 4 shows the format of the ASSIGNMENT REQUEST message. If TYPE is set to O, it indicates an optional IE; MSC-BSS indicates the direction from the MSC to the BSS; the meaning of Redundancy Level IE information is similar to that of Redundancy Level IE information in step 101A above.

101C. The first BSS receives the ASSIGNMENT REQUEST message, decides to choose a redundancy level according to its own link status and bandwidth information, and sends an ASSIGNMENT COMPLETE message to the first MSC, where the ASSIGNMENT COMPLETE message carries newly-added Redundancy Level IE information indicative of the redundancy level finally chosen by the first BSS; the second BSS receives the ASSIGNMENT REQUEST message, decides to choose a redundancy level according to its own link status and bandwidth information, and sends an ASSIGNMENT COMPLETE message to the second MSC, where the ASSIGNMENT COMPLETE message carries newly-added Redundancy Level IE information indicative of the redundancy level finally chosen by the second BSS.

Specifically, for example, in step 101B above, the redundancy level returned by the MSC (the first MSC) is redundancy level 3, and the redundancy level returned by the second MSC is also redundancy level 3. The first BSS may finally choose redundancy level 2 according to its own link status and bandwidth information, and the second BSS may finally choose redundancy level 3 according to its own link status and bandwidth information. The redundancy levels finally chosen by the first BSS and the second BSS are different. Certainly, the ideal result is that the redundancy level finally chosen by the first BSS and the second BSS is the same as the redundancy level the MSC expects to use.

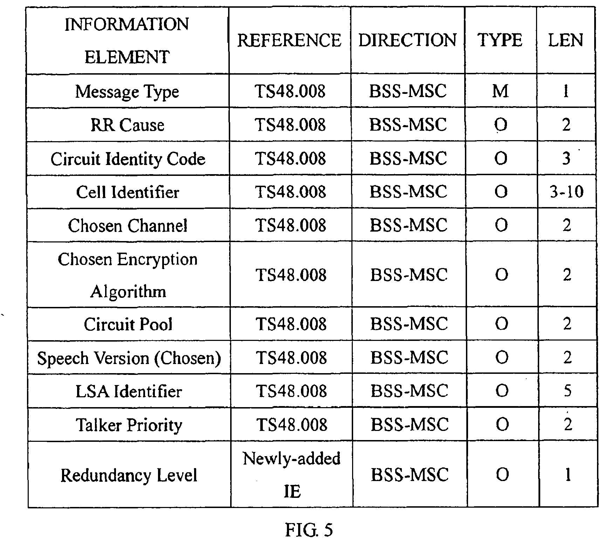

FIG. 5 shows the format of the ASSIGNMENT COMPLETE message. BSS-MSC indicates the direction from the BSS to the MSC; the meaning of Redundancy Level IE information is similar to that of Redundancy Level IE information in step 101A above.

102. The BSS generates a redundancy packet according to the chosen redundancy level and sends the redundancy packet to the MSC.

The BSS generates a Real-time Transport Protocol (RTP) packet according to the chosen redundancy level and sends the RTP packet to the MSC. The RTP packet is a redundancy packet, and its payload is composed of multiple successive data blocks. A single data block in the redundancy packet is generated from the physical frame on the air interface. Specifically, the data block may be one of the following items but is not limited to the following items:
1. a complete RTP packet;
2. an RTP payload after the RTP header is removed;
3. a compressed data frame on the air interface;
4. one or more V.110 frames; and
5. a data block of 64 kbps.

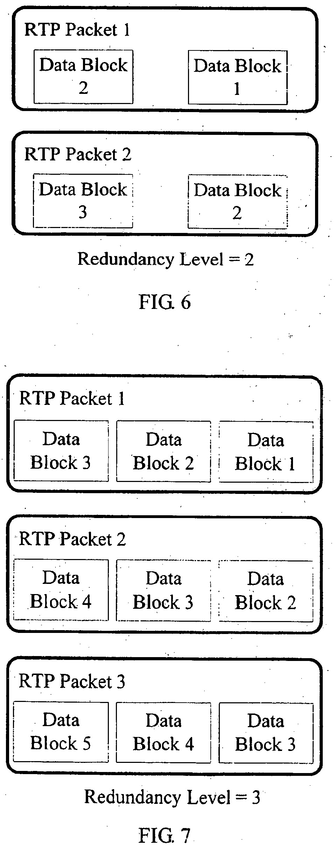

The maximum times of transmission of a data block is defined as a redundancy level of a redundancy packet. As shown in FIG. 6, the maximum times of transmission of each data block is 2, and therefore the redundancy level of the redundancy packet is redundancy level 2. As shown in FIG. 7, the maximum times of transmissions of each data block is 3, and therefore the redundancy level of the redundancy packet is redundancy level 3. The redundancy packet may be generated by the BSC or the BTS through a data buffer mechanism. Because the BSS includes a BSC and a BTS, the BSC can send a redundancy packet to the MSC, or the BTS can send a redundancy packet to the MSC through the BSC. If the IP transmission mode is adopted on the Abis interface between the BSC and the BTS, the BTS can generate a redundancy packet. In this case, the Abis interface also transmits the redundancy packet.

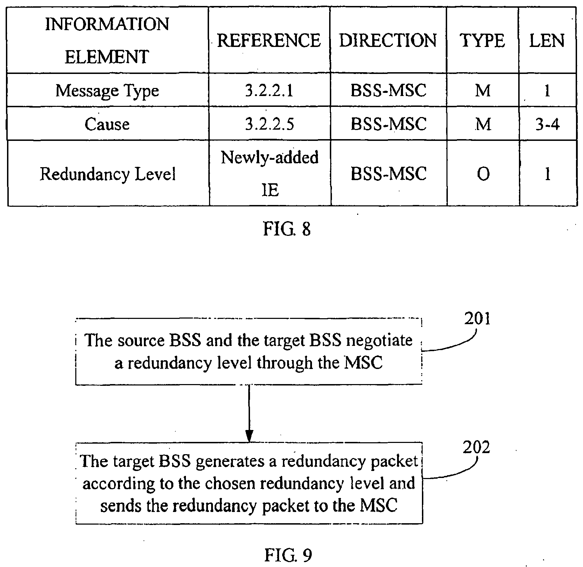

In this embodiment, the BSS can dynamically adjust the value of Redundancy Level according to the link status and bandwidth information. The adjustment request is defined by adding field information indicative of Redundancy Level to the Cause IE in the CHANNEL MODIFY REQUEST message, or by adding Redundancy Level IE information indicative of the adjusted Redundancy Level to the CHANNEL MODIFY REQUEST message. Alternatively, a new message is defined, where the new message carries the Redundancy Level IE information indicative of the adjusted redundancy level. FIG. 8 shows the format of the CHANNEL MODIFY REQUEST message.

In the technical solution provided in the embodiment of the present invention, redundancy level information is carried in the redundancy level negotiation message; the BSS uses the redundancy level information in the redundancy level negotiation message to negotiate a redundancy level with the MSC, and obtains a chosen redundancy level; the BSS generates a redundancy packet according to the chosen redundancy level, and sends the generated redundancy packet to the MSC through the A interface. Therefore, the probability of user data loss as a result of packet loss is substantially reduced in AoIP, and the QoS of the voice service and the CSD service is improved.

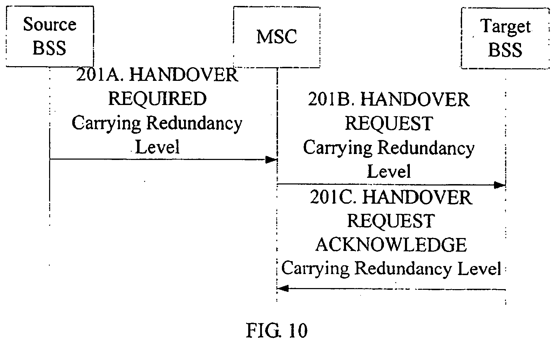

A method for data transmission is also provided in another embodiment of the present invention. Different from the embodiment above, in this embodiment, call handover is performed between BSSs. As shown in FIG. 9, this method of the embodiment includes the following steps:
201. The source BSS and the target BSS negotiate a redundancy level through the MSC. As shown in FIG. 10, specifically, this step includes the following:
   201A. The source BSS sends a HANDOVER REQUIRED message to the MSC, where the HANDOVER REQUIRED message carries newly-added Redundancy Level IE information indicative of the redundancy level supported by the source BSS.

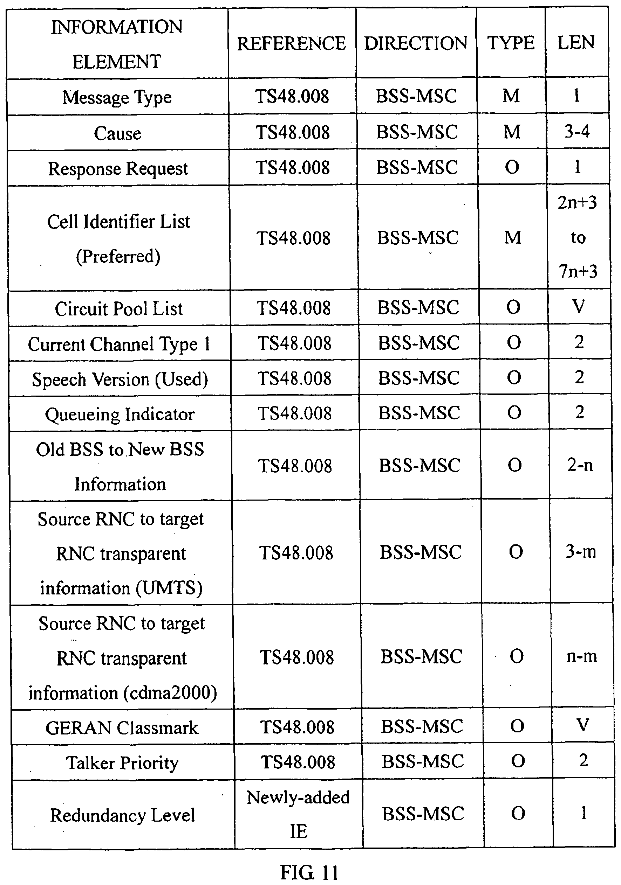

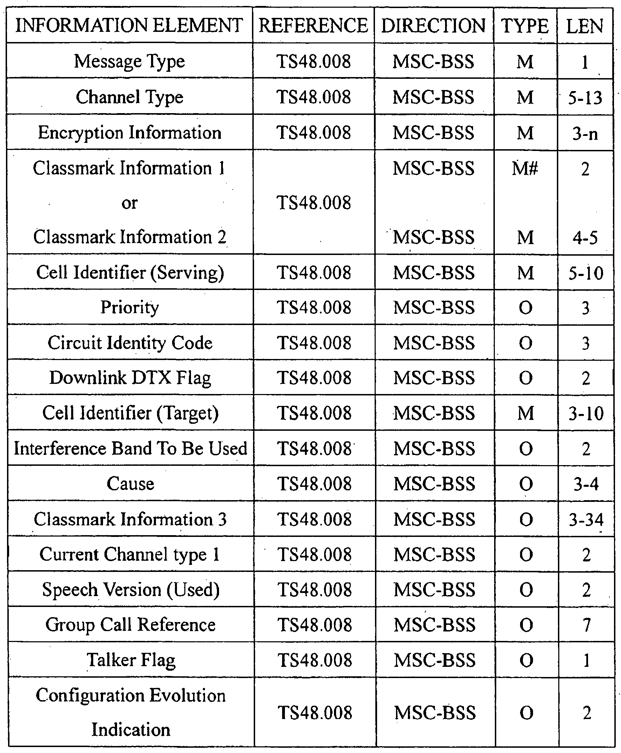

FIG. 11 shows the format of the HANDOVER REQUIRED message. If TYPE is set to O, it indicates an optional IE; BSS-MSC indicates the direction from the BSS to the MSC; the meaning of Redundancy Level IE information is similar to that of Redundancy Level IE information in step 101A above.

201B. The MSC receives the HANDOVER REQUIRED message and sends a HANDOVER REQUEST message to the target BSS, where the HANDOVER REQUEST message carries newly-added Redundancy Level IE information indicative of the redundancy level the MSC expects to use.

Specifically, for example, in step 201 A above, the redundancy level supported by the source BSS is 3. After receiving the HANDOVER REQUIRED message, the MSC can directly send information of the redundancy level supported by the source BSS in the HANDOVER REQUIRED message to the target BSS through the HANDOVER REQUEST message. Alternatively, the MSC may choose any other desired redundancy level according to the statistics reported by the system, for example, redundancy level 2, and send the desired redundancy level to the target BSS through the HANDOVER REQUEST message.

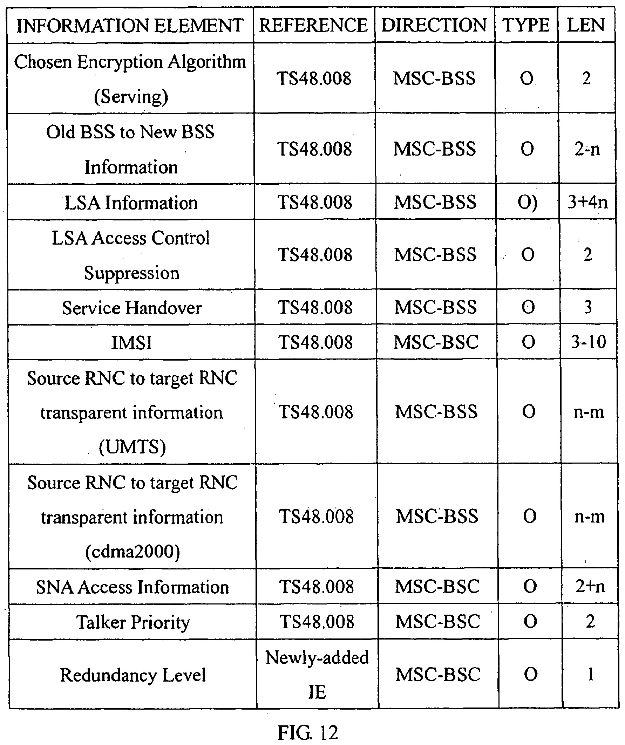

FIG. 12 shows the format of the HANDOVER REQUEST message. If TYPE is set to O, it indicates an optional IE; MSC-BSC indicates the direction from the MSC to the BSC; the meaning of Redundancy Level IE information is similar to that of Redundancy Level IE information in step 101A above.

201C. The target BSS receives the HANDOVER REQUEST message, decides to choose a redundancy level according to its own link status and bandwidth information, and sends a HADNOVER REQUEST ACKNOWLEDGE message to the MSC, where the HADNOVER REQUEST ACKNOWLEDGE message carries newly-added Redundancy Level IE information indicative of the redundancy level finally chosen by the target BSS.

The target BSS receives the HANDOVER REQUEST message, decides to choose a supported redundancy level according to its own link status and bandwidth information, and sends the chosen redundancy level to the MSC through a HADNOVER REQUEST ACKNOWLEDGE message to the MSC. The redundancy level chosen by the target BSS may be the same as or different from the redundancy level chosen by the source BSS.

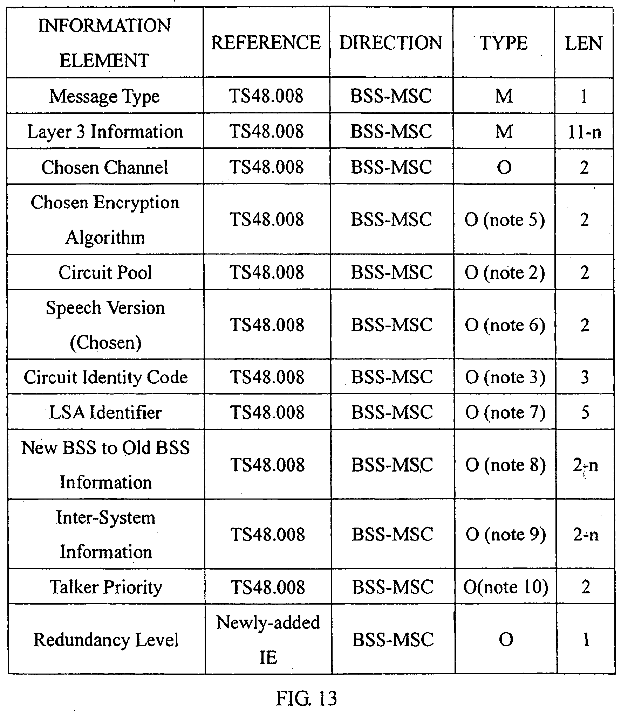

FIG. 13 shows the format of the HADNOVER REQUEST ACKNOWLEDGE message. If TYPE is set to O, it indicates an optional IE; BSS-MSC indicates the direction from the BSS to the MSC; the meaning of Redundancy Level IE information is similar to that of Redundancy Level IE information in step 101A above.

202. The target BSS generates a redundancy packet according to the chosen redundancy level and sends the redundancy packet to the MSC.

The specific step is similar to step 102.

In this embodiment, the BSS may dynamically adjust the value of Redundancy Level according to the link status and bandwidth information. The adjustment request is defined by adding field information indicative of Redundancy Level to the Cause IE in the CHANNEL MODIFY REQUEST message, or by adding Redundancy Level IE information indicative of the Redundancy Level to the CHANNEL MODIFY REQUEST message. Alternatively, a new message is defined, where the new message carries the Redundancy Level IE information indicative of the redundancy level. FIG. 8 shows the format of the CHANNEL MODIFY REQUEST message.

In the technical solution provided in the embodiment of the present invention, redundancy level information is carried in the redundancy level negotiation message; the source BSS and the target BSS use the redundancy level information in the redundancy level negotiation message to negotiate a redundancy level through the MSC, and a chosen redundancy level is obtained; the target BSS generates a redundancy packet according to the chosen redundancy level, and sends the generated redundancy packet to the MSC through the A interface. Therefore, the probability of user data loss as a result of packet loss is substantially reduced in AoIP, and the QoS of the voice service and the CSD service is improved.

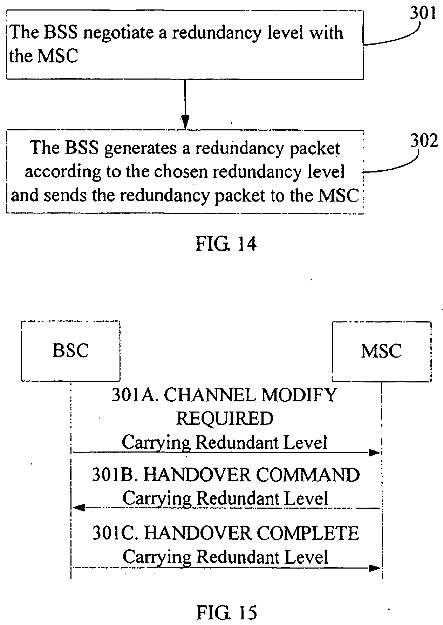

Another method for data transmission is provided in an embodiment of the present invention. Different from the embodiment above, in this embodiment, the application scenario is: when the A interface between the BSC and the BTS adopts the IP transmission technology, call handover is performed within the BSS. As shown in FIG. 14, this method of the embodiment includes the following steps:
301. The BSS negotiate a redundancy level with the MSC. As shown in FIG. 15, specifically, this step includes the following:
   301A. The BSC sends a CHANNEL MODIFY REQUIRED message to the MSC, where the CHANNEL MODIFY REQUIRED message carries newly-added Redundancy Level IE information indicative of the redundancy level supported by the target BTS.

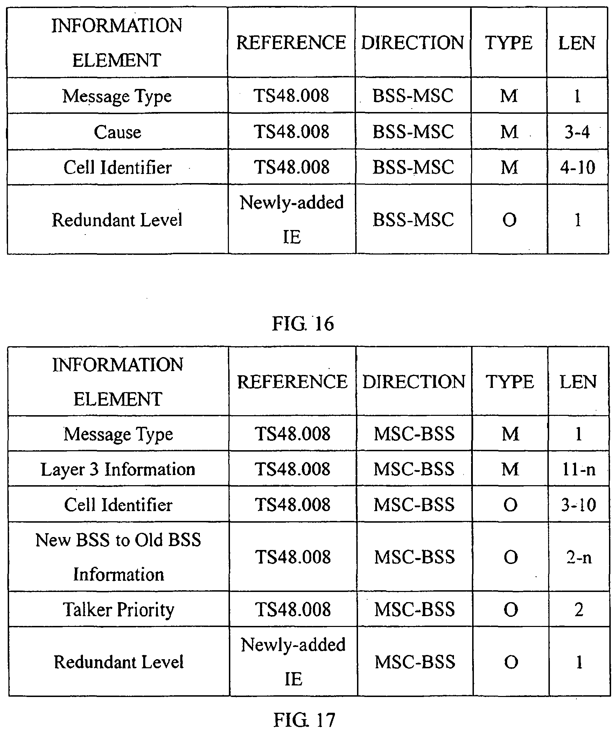

FIG. 16 shows the format of the CHANNEL MODIFY REQUIRED message. If TYPE is set to O, it indicates an optional IE; BSS-MSC indicates the direction from the BSS to the MSC; the meaning of Redundancy Level IE information is similar to that of Redundancy Level IE information in step 101A above.

301B. The MSC receives the CHANNEL MODIFY REQUIRED message and sends a HADNDOVER COMMAND message to the BSC, where the HADNDOVER COMMAND message carries newly-added Redundancy Level IE information indicative of the redundancy level the MSC expects to use.

FIG. 17 shows the format of the HADNDOVER COMMAND message. If TYPE is set to O, it indicates an optional IE; MSC-BSS indicates the direction from the MSC to the BSS; the meaning of Redundancy Level IE information is similar to that of Redundancy Level IE information in step 101A above.

301C. The BSC receives the HADNDOVER COMMAND message, determines a redundancy level the target BTS expects to use according to the link status and bandwidth information of the target BTS, and sends a HADNDOVER COMPLETE message to the MSC, where the HADNDOVER COMPLETE message carries newly-added Redundancy Level IE information indicative of the redundancy level chosen for the target BTS.

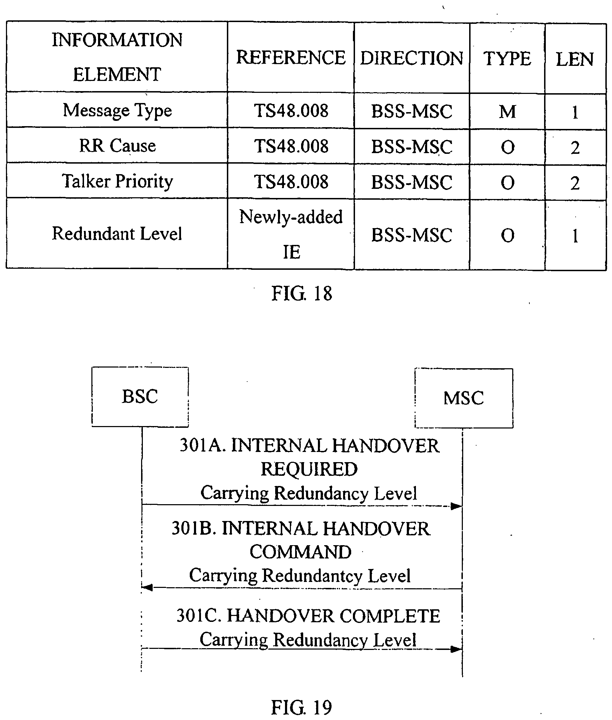

FIG. 18 shows the format of the HADNDOVER COMPLETE message. If TYPE is set to O, it indicates an optional IE; BSS-MSC indicates the direction from the BSS to the MSC; the meaning of Redundancy Level IE information is similar to that of Redundancy Level IE information in step 101A above.

As shown in FIG. 19, specifically, step 301 may include the following:
301a. The BSC sends an INTERNAL HANDOVER REQUIRED message to the MSC, where the INTERNAL HANDOVER REQUIRED message carries newly-added Redundancy Level IE information indicative of the redundancy level supported by the target BTS.

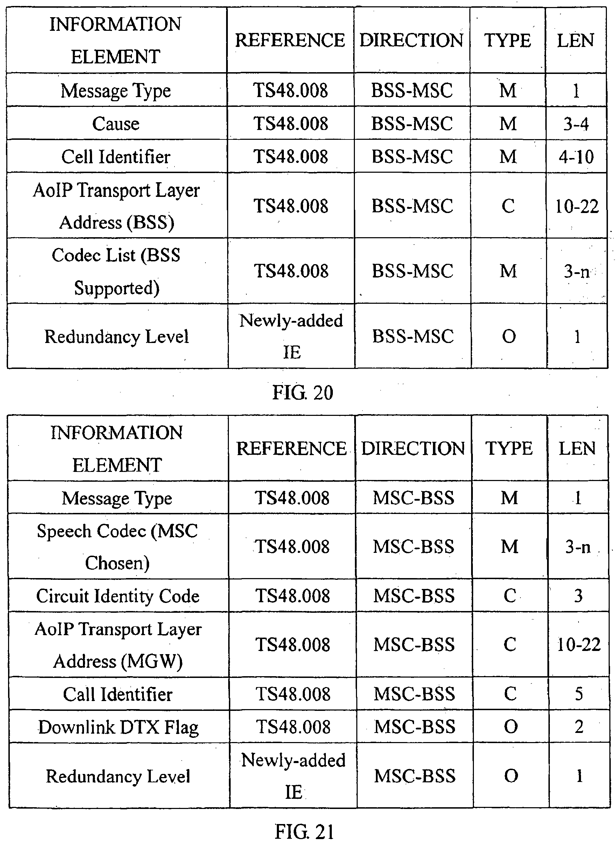

FIG. 20 shows the format of the INTERNAL HANDOVER REQUIRED message. If TYPE is set to O, it indicates an optional IE; BSS-MSC indicates the direction from the BSS to the MSC; the meaning of Redundancy Level IE information is similar to that of Redundancy Level IE information in step 101A above.

301b. The MSC receives the INTERNAL HANDOVER REQUIRED message and sends an INTERNAL HADNDOVER COMMAND message to the BSC, where the INTERNAL HADNDOVER COMMAND message carries newly-added Redundancy Level IE information indicative of the redundancy level the MSC expects to use.

FIG. 21 shows the format of the INTERNAL HADNDOVER COMMAND message. If TYPE is set to O, it indicates an optional IE; MSC-BSS indicates the direction from the MSC to the BSS; the meaning of Redundancy Level IE information is similar to that of Redundancy Level IE information in step 101A above.

301c. The BSC receives the INTERNAL HADNDOVER COMMAND message, determines a redundancy level the target BTS expects to use according to the link status and bandwidth information of the target BTS, and sends an INTERNAL HADNDOVER COMPLETE message to the MSC, where the INTERNAL HADNDOVER COMPLETE message carries newly-added Redundancy Level IE information indicative of the redundancy level chosen for the target BTS.

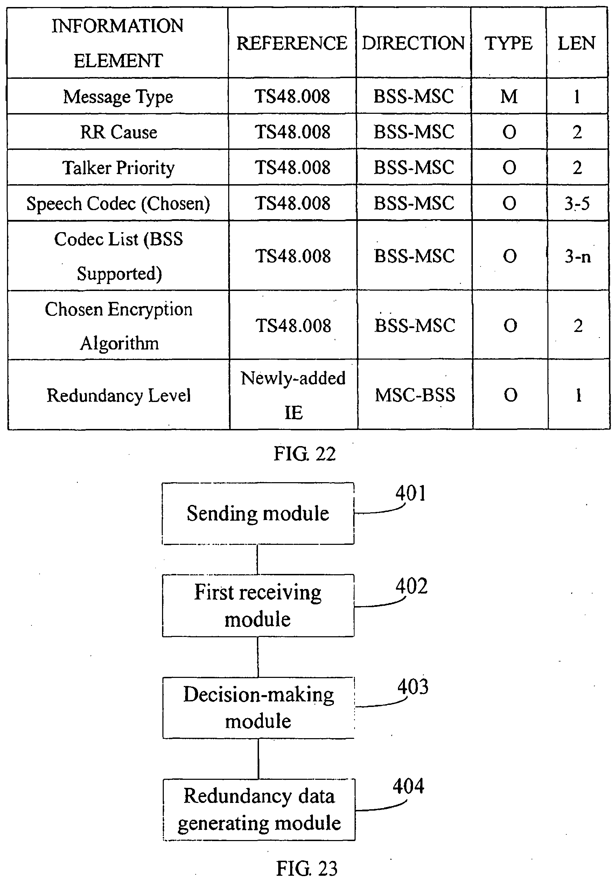

FIG. 22 shows the format of the INTERNAL HADNDOVER COMPLETE message. If TYPE is set to O, it indicates an optional IE; BSS-MSC indicates the direction from the BSS to the MSC; the meaning of Redundancy Level IE information is similar to that of Redundancy Level IE information in step 101A above.

The BSS includes the BSC and the BTS. In the implementation process of step 301 above, the BSC and the MSC perform negotiation to obtain information of the chosen redundancy level and generate a redundancy packet. The implementation process may also be performed by the BTS and the MSC, which should not be construed as a limitation to the present invention.

302. The BSS generates a redundancy packet according to the chosen redundancy level and sends the redundancy packet to the MSC.

In this step, call handover is performed within the BSS, that is, the source BTS in the BSS hands over the call to the target BTS in the BSS. At this time, the target BTS in the BSS generates a redundancy packet according to the redundancy level finally chosen in step 301C or step 301c, and sends the redundancy packet to the MSC. The target BTS in the BSS sends the redundancy packet to the MSC through the BSC in the BSS. Alternatively, the target BTS in the BSS can generate an ordinary packet and then send the ordinary packet to the BSC; then the BSC generates a redundancy packet and sends the redundancy packet to the MSC. In this step, the BSS generates the redundancy packet. In the embodiments of the present invention, whether the BSS generating the redundancy packet is relevant to the BSC or the BTS is not construed as a limitation to the present invention.

The specific step is similar to step 102 above.

In this embodiment, the BSS can dynamically adjust the value of Redundancy Level according to the link status and bandwidth information. The adjustment request is defined by adding field information indicative of Redundancy Level to the Cause IE in the CHANNEL MODIFY REQUEST message, or by adding Redundancy Level IE information indicative of the Redundancy Level to the CHANNEL MODIFY REQUEST message. Alternatively, a new message is defined, where the new message carries the Redundancy Level IE information indicative of the redundancy level. FIG. 8 shows the format of the CHANNEL MODIFY REQUEST message.

In the technical solution provided in the embodiment of the present invention, redundancy level information is carried in the redundancy level negotiation message; the BSC in the BSS uses the redundancy level information in the redundancy level negotiation message to negotiate a redundancy level with the MSC, and obtains a chosen redundancy level; the target BTS in the BSS generates a redundancy packet according to the chosen redundancy level, and sends the generated redundancy packet to the MSC through the A interface. Therefore, the probability of user data loss as a result of packet loss is substantially reduced in AoIP, and the QoS of the voice service and the CSD service is improved.

A BSS is provided in an embodiment of the present invention. The BSS is configured to negotiate a redundancy level with the MSC. Specifically, the BSS sends a redundancy level negotiation request message to the MSC, where the redundancy level negotiation request message carries information of the redundancy level supported by the BSS and may be a redefined message or an existing A interface message, for example, COMPLETE LAYER 3 MESSAGE, HANDOVER REQUIRED, CHANNEL MODIFY REQUEST, or INTERNAL HANDOVER REQUIRED.

The BSS receives a redundancy level negotiation response message sent from the MSC, where the redundancy level negotiation response message carries newly-added information indicative of the redundancy level that the MSC expects to use and the message may be a redefined message or an existing A interface message, for example, ASSIGNMENT REQUEST, HANDOVER REQUEST, HADNDOVER COMMAND, or INTERNAL HADNDOVER COMMAND.

The BSS chooses a redundancy level according to its own status (such as link status and bandwidth information), and sends information of the chosen redundancy level to the MSC. The information of the chosen redundancy level may be carried in a message, for example, a redefined message, or an existing A interface message such as ASSIGNMENT COMPLETE, HADNOVER REQUEST ACKNOWLEDGE, or HADNDOVER COMPLETE.

The BSS generates a redundancy packet according to the information of the chosen redundancy level, and sends the redundancy packet to the MSC.

The BSS may adjust the redundancy level supported by the BSS itself when its own link status or bandwidth information is changed, and send information of the adjusted redundancy level to the MSC.

As shown in FIG. 23, a typical BSS includes:
a sending module 401, configured to send a redundancy level negotiation request message to an MSC, where the redundancy level negotiation request message carries information of a redundancy level supported by the BSS;
a first receiving module 402, configured to receive a redundancy level negotiation response message sent from the MSC, where the redundancy level negotiation response message carries information of a redundancy level that the MSC expects to use;
a decision-making module 403, configured to choose a redundancy level according to its own capabilities (such as link status or bandwidth information); and
a redundancy data generating module 404, configured to generate a redundancy packet according to the chosen redundancy level and send the generated redundancy packet to the MSC.

The BSS may further includes a triggering module and a redundancy level adjusting module.

The triggering module is configured to trigger the redundancy level adjusting module when the capabilities (such as link status or bandwidth information) of the BSS change.

The redundancy level adjusting module is configured to adjust the redundancy level supported by the BSS and send the adjusted redundancy level to the MSC.

An MSC is provided in an embodiment of the present invention. The MSC is configured to negotiate a redundancy level with the BSS. Specifically, the MSC receives a redundancy level negotiation request message sent from the BSS, where the redundancy level negotiation request message carries information of a redundancy level supported by the BSS.

The MSC determines a redundancy level that the MSC expects to use according to the statistics reported by the system. The redundancy level that the MSC expects to use may be the same as or different from the redundancy level supported by the BSS. Ideally, the redundancy level that the MSC expects to use is the same as the redundancy level supported by the BSS.

The MSC sends a redundancy level negotiation response message to the BSS, where the redundancy level negotiation response message carries information of a redundancy level that the MSC expects to use.

The redundancy level negotiation request message and the redundancy level negotiation response message may be redefined messages or existing A interface messages.

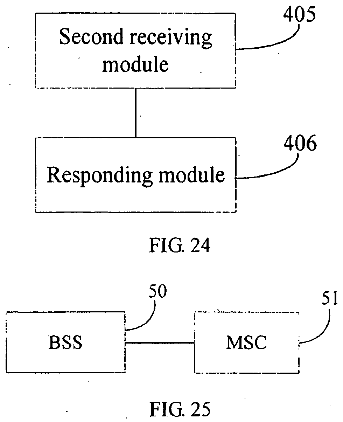

As shown in FIG. 24, a typical MSC includes:
a second receiving module 405, configured to receive a redundancy level negotiation request message sent from a BSS, where the redundancy level negotiation request message carries information of a redundancy level supported by the BSS; and
a responding module 406, configured to send a redundancy level negotiation response message to the BSS, where the redundancy level negotiation response message carries information of a redundancy level that the MSC expects to use.

As shown in FIG. 25, a system for data transmission in an embodiment of the present invention includes a BSS 50 and an MSC 51.

The BSS 50 is configured to send a redundancy level negotiation request message to the MSC 51, where the redundancy level negotiation request message carries information of a redundancy level supported by the BSS 50.

The BSS 50 receives a redundancy level negotiation response message sent from the MSC 51, where the redundancy level negotiation response message carries information of a redundancy level that the MSC 51 expects to use.

The BSS 50 chooses a redundancy level according to its own capabilities (such as link status and bandwidth information), generates a redundancy packet according to the chosen redundancy level, and sends the redundancy packet to the MSC 51.

The BSS 50 is further configured to adjust the supported redundancy level according to its own capabilities and send information of the adjusted redundancy level to the MSC 51.

The redundancy level negotiation request message and the redundancy level negotiation response message may be redefined messages or existing A interface messages.

In the technical solution provided in the embodiment of the present invention, redundancy level information is carried in the redundancy level negotiation message; the BSS uses the redundancy level information in the redundancy level negotiation message to negotiate a redundancy level with the MSC, and obtains a chosen redundancy level; the BSS generates a redundancy packet according to the chosen redundancy level, and sends the generated redundancy packet to the MSC through the A interface. Therefore, the probability of user data loss as a result of packet loss is substantially reduced in AoIP, and the QoS of the voice service and the CSD service is improved.

Although the invention has been described through some preferred embodiments, the invention is not limited to such embodiments. The invention is intended to cover the modifications, equivalent substitutions and variations provided that they fall within the scope of protection defined by the following claims or their equivalents.

## Claims

1. A method for data transmission, **characterized by** comprising:
negotiating, by a Base Station Subsystem, BSS, a redundancy level with a Mobile Switching Center, MSC, through a redundancy level negotiation message;
choosing, by the BSS, a redundancy level; and
generating, by the BSS, a redundancy packet according to the chosen redundancy level and sending the redundancy packet to the MSC;
wherein the negotiating a redundancy level by the BSS with the MSC through the redundancy level negotiation message comprises:
sending, by the BSS, a redundancy level negotiation request message to the MSC, wherein the redundancy level negotiation request message carries information of a redundancy level supported by the BSS; and
receiving, by the BSS, a redundancy level negotiation response message sent from the MSC, wherein the redundancy level negotiation response message carries information of a redundancy level that the MSC expects to use.

2. The method of claim 1, wherein the negotiating a redundancy level by the BSS with the MSC through the redundancy level negotiation message comprises:
negotiating, by the BSS, a redundancy level with the MSC through redundancy level information carried in the redundancy level negotiation message.

3. The method of claim 1, or 2, wherein: when the BSS sets up a call connection, the BSS comprises a first BSS and a second BSS, and the MSC comprises a first MSC and a second MSC; and the negotiating a redundancy level with the MSC through the redundancy level negotiation message and choosing the redundancy level by the BSS comprises:
sending, by the first BSS, a redundancy level negotiation request message to the first MSC, wherein the redundancy level negotiation request message carries information of a redundancy level supported by the first BSS; and sending, by the second BSS, a redundancy level negotiation request message to the second MSC, wherein the redundancy level negotiation request message carries information of a redundancy level supported by the second BSS;
receiving, by the first BSS, a redundancy level negotiation response message returned by the first MSC, wherein the redundancy level negotiation response message carries information of a redundancy level that the first MSC expects to use; and receiving, by the second BSS, a redundancy level negotiation response message returned by the second MSC, wherein the redundancy level negotiation response message carries information of a redundancy level that the second MSC expects to use; and
choosing, by the first BSS, a redundancy level according to its own capabilities, and sending a redundancy level negotiation decision message to the first MSC, wherein the redundancy level negotiation decision message carries information of the redundancy level chosen by the first BSS; and choosing, by the second BSS, a redundancy level according to its own capabilities, and sending a redundancy level negotiation decision message to the second MSC, wherein the redundancy level negotiation decision message carries information of the redundancy level chosen by the second BSS.

4. The method of one of the claims 1 to 3, wherein the BSS comprises a first Base Transceiver Station, BTS, a second BTS and a Base Station Controller, BSC, when a call is handovered from the first BTS to the second BTS, the negotiating a redundancy level with the MSC through the redundancy level negotiation message and choosing the redundancy level by the BSS comprises:
sending, by the BSC in the BSS, a redundancy level negotiation request message to the MSC, wherein the redundancy level negotiation request message carries information of a redundancy level supported by the second BTS;
receiving, by the BSC in the BSS, a redundancy level negotiation response message sent from the MSC, wherein the redundancy level negotiation response message carries information of a redundancy level that the MSC expects to use;
determining, by the BSC in the BSS, the redundancy level for the second BTS according to capabilities of the second BTS, and sending a redundancy level negotiation decision message to the MSC, wherein the redundancy level negotiation decision message carries information of the redundancy level chosen for the second BTS; and
generating, by the second BTS, the redundancy packet according to the redundancy level chosen by the BSC in the BSS, and sending the redundancy packet to the MSC.

5. The method of any of claims 1 to 4, after sending the redundancy packet to the MSC, further comprising:
adjusting, by the BSS, its supported redundancy level according to its own capabilities, and sending a redundancy level adjustment message to the MSC, wherein the redundancy level adjustment message carries information of the redundancy level adjusted by the BSS.

6. The method of any of claims 1 to 5, wherein the redundancy packet comprises a Real-time Transport Protocol, RTP, packet, and the RTP packet comprises a plurality of successive data blocks.

7. The method of claim 5, wherein the redundancy level information comprises voice service redundancy level information and/or Circuit-Switched Data, CSD, service redundancy level information.

8. The method of one of claims 1 to 7, wherein the method is applied in A interface over IP, AoIP, to implement redundancy data.

9. A Base Station Subsystem, BSS, **characterized by** comprising:
a sending module (401), configured to send a redundancy level negotiation request message to a Mobile Switching Center, MSC, wherein the redundancy level negotiation request message carries information of a redundancy level supported by the BSS;
a first receiving module (402), configured to receive a redundancy level negotiation response message sent from the MSC, wherein the redundancy level negotiation response message carries information of a redundancy level that the MSC expects to use;
a decision-making module (403), configured to choose a redundancy level according to its own capabilities; and
a redundancy data generating module (404), configured to generate a redundancy packet according to the chosen redundancy level and send the generated redundancy packet to the MSC.

10. The BSS of claim 9, further comprising a triggering module and a redundancy level adjusting module, wherein:
the triggering module is configured to trigger the redundancy level adjusting module when the capabilities of the BSS change; and
the redundancy level adjusting module is configured to adjust a redundancy level supported by the BSS and send the adjusted redundancy level to the MSC.

11. The BSS of claim 9 or claim 10, wherein the redundancy packet comprises a Real-time Transport Protocol, RTP, packet, and the RTP packet comprises a plurality of successive data blocks.

12. A Mobile Switching Center, MSC, **characterized by** comprising:
a second receiving module (405), configured to receive a redundancy level negotiation request message sent from a Base Station Subsystem, BSS, wherein the redundancy level negotiation request message carries information of a redundancy level supported by the BSS; and
a responding module (406), configured to send a redundancy level negotiation response message to the BSS, wherein the redundancy level negotiation response message carries information of a redundancy level that the MSC expects to use.

13. A system for data transmission **characterized by** comprising a Base Station Subsystem, BSS (50), according to any of claims 9 to 11 and a Mobile Switching Center, MSC (51), according to claim 12.

## Patentansprüche

1. Verfahren für die Datenübertragung, **dadurch gekennzeichnet, dass** es Folgendes umfasst:
Aushandeln eines Redundanzniveaus durch ein Basisstations-Untersystem, BSS, mit einer Mobilvermittlungsstelle, MSC, mittels einer Redundanzniveau-Aushandlungsnachricht;
Wählen eines Redundanzniveaus durch das BSS; und
Erzeugen eines Redundanzpakets in Übereinstimmung mit dem gewählten Redundanzniveau und Senden des Redundanzpakets an die MSC durch das BSS;
wobei das Aushandeln eines Redundanzniveaus durch das BSS mit der MSC mittels der Redundanzniveau-Aushandlungsnachricht Folgendes umfasst:
Senden einer Redundanzniveau-Aushandlungsanforderungsnachricht an die MSC durch das BSS, wobei die Redundanzniveau-Aushandlungsanforderungsnachricht Informationen über ein durch das BSS unterstütztes Redundanzniveau führt; und
Empfangen einer von der MSC gesendeten Redundanzniveau-Aushandlungsantwortnachricht durch das BSS, wobei die Redundanzniveau-Aushandlungsantwortnachricht Informationen über ein Redundanzniveau führt, dessen Verwendung die MSC erwartet.

2. Verfahren nach Anspruch 1, wobei das Aushandeln eines Redundanzniveaus durch das BSS mit der MSC mittels der Redundanzniveau-Aushandlungsnachricht Folgendes umfasst:
Aushandeln eines Redundanzniveaus durch das BSS mit der MSC mittels Redundanzniveauinformationen, die in der Redundanzniveau-Aushandlungsnachricht geführt werden.

3. Verfahren nach Anspruch 1 oder 2, wobei: wenn das BSS eine Anrufverbindung aufbaut, das BSS ein erstes BSS und ein zweites BSS umfasst und die MSC eine erste MSC und eine zweite MSC umfasst; und das Aushandeln eines Redundanzniveaus mittels der Redundanzniveau-Aushandlungsnachricht mit der MSC und das Wählen des Redundanzniveaus durch das BSS Folgendes umfasst:
Senden einer Redundanzniveau-Aushandlungsanforderungsnachricht an die erste MSC durch das erste BSS, wobei die Redundanzniveau-Aushandlungsanforderungsnachricht Informationen über ein durch das erste BSS unterstütztes Redundanzniveau führt; und Senden einer Redundanzniveau-Aushandlungsanforderungsnachricht an die zweite MSC durch das zweite BSS, wobei die Redundanzniveau-Aushandlungsanforderungsnachricht Informationen über ein durch das zweite BSS unterstütztes Redundanzniveau führt;
Empfangen einer durch die erste MSC zurückgeschickten Redundanzniveau-Aushandlungsantwortnachricht durch das erste BSS, wobei die Redundanzniveau-Aushandlungsantwortnachricht Informationen über ein Redundanzniveau führt, dessen Verwendung die erste MSC erwartet; und Empfangen einer durch die zweite MSC zurückgeschickten Redundanzniveau-Aushandlungsantwortnachricht durch das zweite BSS, wobei die Redundanzniveau-Aushandlungsantwortnachricht Informationen über ein Redundanzniveau führt, dessen Verwendung die zweite MSC erwartet; und
Wählen eines Redundanzniveaus durch das erste BSS in Übereinstimmung mit seinen eigenen Fähigkeiten und Senden einer Redundanzniveau-Aushandlungsentscheidungsnachricht an die erste MSC, wobei die Redundanzniveau-Aushandlungsentscheidungsnachricht Informationen über das durch das erste BSS gewählte Redundanzniveau führt; und Wählen eines Redundanzniveaus durch das zweite BSS in Übereinstimmung mit seinen eigenen Fähigkeiten und Senden einer Redundanzniveau-Aushandlungsentscheidungsnachricht an die zweite MSC, wobei die Redundanzniveau-Aushandlungsentscheidungsnachricht Informationen über das durch das zweite BSS gewählte Redundanzniveau führt.

4. Verfahren nach einem der Ansprüche 1 bis 3, wobei das BSS eine erste Basis-Sender/Empfänger-Station, BTS, eine zweite BTS und eine Basisstations-Steuereinrichtung, BSC, umfasst, wobei, wenn ein Anruf von der ersten BTS zu der zweiten BTS weitergereicht wird, das Aushandeln eines Redundanzniveaus mit der MSC mittels der Redundanzniveau-Aushandlungsnachricht und das Wählen des Redundanzniveaus durch das BSS Folgendes umfasst:
Senden einer Redundanzniveau-Aushandlungsanforderungsnachricht an die MSC durch die BSC in dem BSS, wobei die Redundanzniveau-Aushandlungsanforderungsnachricht Informationen über ein durch die zweite BTS unterstütztes Redundanzniveau führt;
Empfangen einer von der MSC gesendeten Redundanzniveau-Aushandlungsantwortnachricht durch die BSC in dem BSS, wobei die Redundanzniveau-Aushandlungsantwortnachricht Informationen über ein Redundanzniveau führt, dessen Verwendung die MSC erwartet;
Bestimmen des Redundanzniveaus für die zweite BTS in Übereinstimmung mit den Fähigkeiten der zweiten BTS und Senden einer Redundanzniveau-Aushandlungsentscheidungsnachricht an die MSC durch die BSC in dem BSS, wobei die Redundanzniveau-Aushandlungsentscheidungsnachricht Informationen über das für die zweite BTS gewählte Redundanzniveau führt; und
Erzeugen des Redundanzpakets in Übereinstimmung mit dem durch die BSC in dem BSS gewählten Redundanzniveau und Senden des Redundanzpakets an die MSC durch die zweite BTS.

5. Verfahren nach einem der Ansprüche 1 bis 4, das nach dem Senden des Redundanzpakets an die MSC ferner Folgendes umfasst:
Einstellen durch das BSS seines unterstützten Redundanzniveaus in Übereinstimmung mit seinen eigenen Fähigkeiten und Senden einer Redundanzniveau-Einstellnachricht an die MSC, wobei die Redundanzniveau-Einstellnachricht Informationen über das durch das BSS eingestellte Redundanzniveau führt.

6. Verfahren nach einem der Ansprüche 1 bis 5, wobei das Redundanzpaket ein Echtzeittransportprotokoll-Paket, RTP-Paket, umfasst und das RTP-Paket mehrere aufeinanderfolgende Datenblöcke umfasst.

7. Verfahren nach Anspruch 5, wobei die Redundanzniveauinformationen Sprachdienst-Redundanzniveauinformationen und/oder Redundanzniveauinformationen des leitungsvermittelten Datendienstes, CSD-Dienstes, umfassen.

8. Verfahren nach einem der Ansprüche 1 bis 7, wobei das Verfahren in A-Schnittstelle-über-IP, AoIP, angewendet wird, um die Redundanzdaten zu implementieren.

9. Basisstations-Untersystem, BSS, **dadurch gekennzeichnet, dass** es Folgendes umfasst:
ein Sendemodul (401), das konfiguriert ist, eine Redundanzniveau-Aushandlungsanforderungsnachricht an eine Mobilvermittlungsstelle, MSC, zu senden, wobei die Redundanzniveau-Aushandlungsanforderungsnachricht Informationen über ein durch das BSS unterstütztes Redundanzniveau führt;
ein erstes Empfangsmodul (402), das konfiguriert ist, eine von der MSC gesendete Redundanzniveau-Aushandlungsantwortnachricht zu empfangen, wobei die Redundanzniveau-Aushandlungsanforderungsnachricht Informationen über ein Redundanzniveau führt, dessen Verwendung die MSC erwartet;
ein Modul (403) zum Treffen von Entscheidungen, das konfiguriert ist, ein Redundanzniveau in Übereinstimmung mit seinen eigenen Fähigkeiten zu wählen; und
ein Redundanzdaten-Erzeugungsmodul (404), das konfiguriert ist, in Übereinstimmung mit dem gewählten Redundanzniveau ein Redundanzpaket zu erzeugen und das erzeugte Redundanzpaket an die MSC zu senden.

10. BSS nach Anspruch 9, das ferner ein Auslösemodul und ein Redundanzniveau-Einstellmodul umfasst, wobei:
das Auslösemodul konfiguriert ist, das Redundanzniveau-Einstellmodul auszulösen, wenn sich die Fähigkeiten des BSS ändern; und
das Redundanzniveau-Einstellmodul konfiguriert ist, ein durch das BSS unterstütztes Redundanzniveau einzustellen und das eingestellte Redundanzniveau an die MSC zu senden.

11. BSS nach Anspruch 9 oder Anspruch 10, wobei das Redundanzpaket ein Echtzeittransportprotokoll-Paket, RTP-Paket, umfasst und das RTP-Paket mehrere aufeinanderfolgende Datenblöcke umfasst.

12. Mobilvermittlungsstelle, MSC, **dadurch gekennzeichnet, dass** sie Folgendes umfasst:
ein zweites Empfangsmodul (405), das konfiguriert ist, eine von einem Basisstations-Untersystem, BSS, gesendete Redundanzniveau-Aushandlungsanforderungsnachricht zu empfangen, wobei die Redundanzniveau-Aushandlungsanforderungsnachricht Informationen über ein durch das BSS unterstütztes Redundanzniveau führt; und
ein Antwortmodul (406), das konfiguriert ist, eine Redundanzniveau-Aushandlungsantwortnachricht an das BSS zu senden, wobei die Redundanzniveau-Aushandlungsantwortnachricht Informationen über ein Redundanzniveau führt, dessen Verwendung die MSC erwartet.

13. System für die Datenübertragung, **dadurch gekennzeichnet, dass** es ein Basisstations-Untersystem, BSS (50), nach einem der Ansprüche 9 bis 11 und eine Mobilvermittlungsstelle, MSC (51), nach Anspruch 12 umfasst.

## Revendications

1. Procédé de transmission de données, **caractérisé en ce qu'**il comprend :
la négociation, par un Sous-système de Station de Base, BSS (Base Station Subsystem), d'un niveau de redondance avec un Centre de Commutation Mobile, MSC (Mobile Switching Center), par l'intermédiaire d'un message de négociation de niveau de redondance ;
le choix, par le BSS, d'un niveau de redondance ; et
la génération, par le BSS, d'un paquet de redondance conformément au niveau de redondance choisi et l'envoi au MSC du paquet de redondance ;
la négociation d'un niveau de redondance par le BSS avec le MSC par l'intermédiaire du message de négociation de niveau de redondance comprenant :
l'envoi au MSC, par le BSS, d'un message de demande de négociation de niveau de redondance, le message de demande de négociation de niveau de redondance acheminant des informations concernant un niveau de redondance pris en charge par le BSS ; et
la réception, par le BSS, d'un message de réponse de négociation de niveau de redondance envoyé par le MSC, le message de réponse de négociation de niveau de redondance acheminant des informations concernant un niveau de redondance que le MSC s'attend à utiliser.

2. Procédé selon la revendication 1, dans lequel la négociation d'un niveau de redondance par le BSS avec le MSC par l'intermédiaire du message de négociation de niveau de redondance comprend :
la négociation, par le BSS, d'un niveau de redondance avec le MSC par l'intermédiaire d'informations de niveau de redondance acheminées dans le message de négociation de niveau de redondance.

3. Procédé selon la revendication 1 ou 2, dans lequel : lorsque le BSS établit une connexion d'appel, le BSS comprend un premier BSS et un second BSS, et le MSC comprend un premier MSC et un second MSC ; et la négociation d'un niveau de redondance avec le MSC par l'intermédiaire du message de négociation de niveau de redondance et le choix du niveau de redondance par le BSS comprennent :
l'envoi au premier MSC, par le premier BSS, d'un message de demande de négociation de niveau de redondance, le message de demande de négociation de niveau de redondance acheminant des informations concernant un niveau de redondance pris en charge par le premier BSS ; et l'envoi au second MSC, par le second BSS, d'un message de demande de négociation de niveau de redondance, le message de demande de négociation de niveau de redondance acheminant des informations concernant un niveau de redondance pris en charge par le second BSS ;
la réception, par le premier BSS, d'un message de réponse de négociation de niveau de redondance envoyé par le premier MSC, le message de réponse de négociation de niveau de redondance acheminant des informations concernant un niveau de redondance que le premier MSC s'attend à utiliser ; et la réception, par le second BSS, d'un message de réponse de négociation de niveau de redondance renvoyé par le second MSC, le message de réponse de négociation de niveau de redondance acheminant des informations concernant un niveau de redondance que le second MSC s'attend à utiliser ; et
le choix, par le premier BSS, d'un niveau de redondance conformément à ses capacités propres, et l'envoi au premier MSC d'un message de décision de négociation de niveau de redondance, le message de décision de niveau de redondance acheminant des informations concernant un niveau de redondance choisi par le premier BSS ; et le choix, par le second BSS, d'un niveau de redondance conformément à ses capacités propres, et l'envoi au second MSC d'un message de décision de négociation de niveau de redondance, le message de décision de négociation de niveau de redondance acheminant des informations concernant le niveau de redondance choisi par le second BSS.

4. Procédé selon l'une des revendications 1 à 3, dans lequel le BSS comprend un premier Station d'Émission-Réception de Base, BTS (Base Transceiver Station), une seconde BTS et un Contrôleur de Station de Base, BSC (Base Station Controller), lorsqu'un appel est transféré de le premier BTS à la seconde BTS, la négociation d'un niveau de redondance avec le MSC par l'intermédiaire du message de négociation de niveau de redondance et le choix du niveau de redondance par le BSS comprennent :
l'envoi au MSC, par le BSC présent dans le BSS, d'un message de demande de négociation de niveau de redondance, le message de demande de négociation de niveau de redondance acheminant des informations concernant un niveau de redondance pris en charge par la seconde BTS ;
la réception, par le BSC présent dans le BSS, d'un message de réponse de négociation de niveau de redondance envoyé par le MSC, le message de réponse de négociation de niveau de redondance acheminant des informations concernant un niveau de redondance que le MSC s'attend à utiliser ;
la détermination, par le BSC présent dans le BSS, du niveau de redondance pour la seconde BTS conformément aux capacités de la seconde BTS et l'envoi au MSC d'un message de décision de négociation de niveau de redondance, le message de décision de négociation de niveau de redondance acheminant des informations concernant un niveau de redondance choisi pour la seconde BTS ; et
la génération, par la seconde BTS, du paquet de redondance conformément au niveau de redondance choisi par le BSC présent dans le BSS, et l'envoi au MSC du paquet de redondance.

5. Procédé selon l'une quelconque des revendications 1 à 4, comprenant en outre, après l'envoi du paquet de redondance au MSC :
l'ajustement, par le BSS, de son niveau de redondance pris en charge conformément à ses capacités propres, et l'envoi au MSC d'un message d'ajustement de niveau de redondance, le message d'ajustement de niveau de redondance acheminant des informations concernant le niveau de redondance ajusté par le BSS.

6. Procédé selon l'une quelconque des revendications 1 à 5, dans lequel le paquet de redondance comprend un paquet de Protocole de Transport Temps Réel, RTP (Real-time Transport Protocol), et le paquet RTP comprend une pluralité de blocs de données successifs.

7. Procédé selon la revendication 5, dans lequel les informations de niveau de redondance comprennent des informations de niveau de redondance de service vocal et/ou des informations de niveau de redondance de service de Données à Commutation de Circuits, SCD (Circuit-Switched Data).

8. Procédé selon l'une quelconque des revendications 1 à 7, dans lequel le procédé est appliqué à une interface A sur IP, AoIP (A Interface over IP), pour mettre en oeuvre des données de redondance.

9. Sous-système de Station de Base, BSS, **caractérisé en ce qu'**il comprend :
un module d'envoi (401), configuré pour envoyer un message de demande de négociation de niveau de redondance à un Centre de Commutation Mobile, MSC, le message de demande de négociation de niveau de redondance acheminant des informations concernant un niveau de redondance pris en charge par le BSS ;
un premier module de réception (402), configuré pour recevoir un message de réponse de négociation de niveau de redondance envoyé par le MSC, le message de réponse de négociation de niveau de redondance acheminant des informations concernant un niveau de redondance que le MSC s'attend à utiliser ;
un module de prise de décision (403), configuré pour choisir un niveau de redondance conformément à ses capacités propres ; et
un module générateur de données de redondance (404), configuré pour générer un paquet de redondance conformément au niveau de redondance choisi, et envoyer au MSC le paquet de redondance généré.

10. BSS selon la revendication 9, comprenant en outre un module de déclenchement et un module d'ajustement de niveau de redondance, dans lequel :
le module de déclenchement est configuré pour déclencher le module d'ajustement de niveau de redondance lorsque les capacités de le BSS varient ; et
le module d'ajustement de niveau de redondance est configuré pour ajuster un niveau de redondance pris en charge par le BSS et pour envoyer au MSC le niveau de redondance ajusté.

11. BSS selon la revendication 9 ou la revendication 10, dans lequel le paquet de redondance comprend un paquet de Protocole de Transport Temps Réel, RTP, et le paquet RTP comprend une pluralité de blocs de données successifs.

12. Centre de Commutation Mobile, MSC, **caractérisé en ce qu'**il comprend :
un second module de réception (405), configuré pour recevoir un message de demande de négociation de niveau de redondance envoyé par la Sous-système de Station de Base, BSS, le message de demande de négociation de niveau de redondance acheminant des informations concernant un niveau de redondance pris en charge par le BSS ; et
un module de réponse (406), configuré pour envoyer au BSS un message de réponse de négociation de niveau de redondance, le message de réponse de négociation de niveau de redondance acheminant des informations concernant un niveau de redondance que le MSC s'attend à utiliser.

13. Système de transmission de données **caractérisé en ce qu'**il comprend un Sous-système de Station de Base, BSS (50), selon l'une quelconque des revendications 9 à 11 et un Centre de Commutation Mobile, MSC (51), selon la revendication 12.
